# EUROPEAN PATENT APPLICATION

(11) **EP 4 227 072 A1**
(43) Date of publication of application: **16.08.2023**
(21) Application number: 22156280.4
(22) Date of filing: 11.02.2022
(51) Int. Cl.: B29D 7/00, C08J 5/02, C08K 7/22, C08K 7/26, C08L 7/02, C08L 9/08, C08L 17/00, C08L 97/00, E04B 1/74, G10K 11/16

(54) **ACOUSTICALLY INSULATING COMPOSITE MATERIAL**

(71) Applicant: EMPA Eidgenössische Materialprüfungs- und Forschungsanstalt, 8600 Dübendorf (CH)
(72) Inventor: Mazrouei-Sebdani, Zahra, 8600 Dübendorf (CH); Malfait, Wim, 8600 Dübendorf (CH)
(74) Representative: Prins Intellectual Property AG

(57) **Abstract**

An acoustically insulating composite material comprising at least an amount of cork and/or rubber, forming mats or boards for application in construction industry, should be an easier produced, lightweight, more environmentally friendly high-quality sound insulating composite material. This is reached by a composite material comprising beside an amount of cork granules, most preferred expanded cork and/or the amount of rubber granules or fibers of natural or synthetic rubber, most preferred recycled rubber, an amount of aerogel granules, as well as an amount of a binder, most preferred a water-based natural rubber latex or water-based Styrene-Butadiene rubber, wherein all materials were hot-pressed forming the mats or boards.

## Description

### TECHNICAL FIELD

The present invention describes an acoustically insulating composite material comprising at least an amount of cork and/or rubber, forming mats or boards for application in construction industry, a production method of aerogel comprising composites and use of acoustically insulating composite material for under-screed or vibration damping application in construction industry.

### STATE OF THE ART

Environmental noise features among the top environmental risks to physical and mental health and well-being, with a substantial burden of disease in Europe, according to Hanninen, O., et al., Environmental burden of disease in Europe: assessing nine risk factors in six countries. Environmental health perspectives, 2014. 122(5): p. 439-446. This harmful noise must be controlled to have an acoustically pleasing and safe environment. There are several methods to control the noise's adverse effect either by sound insulation or sound absorption according to the end-use requirements.

Some sound insulating or sound absorbing composites were prepared and tested, which showed various disadvantages, from complicated production and extremely high manufacturing costs to problems with the installation of the composites as floor or wall coverings.

The here presented composites can be used in acoustic insulation products for two closely related applications and markets: under-screed insulation of structure-borne sound, and vibration damping.

Human sensitivity to vibration is greatest in the frequency range of 2-20 Hz (Broos et al., API PU Conf. 2000). There are different types of structure-borne and vibration damping products in the market, which are generally made from recycled rubber, rigid fiberglass, or foam, whether flat or profiled, flexible or rigid. Recycled rubber products tend to lack performance even in high thickness, whereas recycled foams are not strong against mechanical force, limiting their use to when the upper imposed force (load) is high. Above all, the most promising structure-borne noise and vibration damping product is high-performance PU foams with a low resonance frequency (down to around 20 Hz under the load 0.002 N/mm²) and dynamic stiffness (down to around 3 MN/m³ under the load 0.002 N/mm²) for a thickness of 20-25 mm or formed patterns on one side of a product. Decrease of resonance/natural frequency and dynamic stiffness can happen under higher load than 0.002 N/mm² and/or higher thickness than 25 mm.

Whenever there is low-frequency noise, specific mats with a low natural/resonance frequency are required, e.g. 20-40 Hz under a load of 0.002 N/mm² or even lower, e.g. around 10-20 Hz under higher load of >0.01 N/mm². Today's market solutions see the use of polyurethane foam mats or alternatively very thick rubber granulate solutions with high cost for both. For this high-performance application, costly, highly engineered PU foams are the only and most reliable current solution, which are made out of polyols and isocyanates.

For under-screed solutions, there are two types of applications: light and heavy screeds. Light screeds can be for loads up to 0.005 N/mm² and heavy screeds for those above 0.005 N/mm². In the area of light screeds, there is heavy competition between two different types: expanded polystyrene (EPS) and rock wool. While light screeds are a mass market, needed in all sorts of housing and offices, heavy screeds are typically used in the industry (e.g., retailers, manufacturing, multifunction rooms). Therefore, the heavy screeds market is less prone to price competition as the physical components must be met first, and as they require profound engineering.

### DESCRIPTION OF THE INVENTION

The object of the present invention is to create an acoustically insulating composite material, present a production method and use of composite material as well as a mold for improved production, for reaching easier produced, lightweight, more environmentally friendly high-quality sound insulating composite materials, to be used for improved under-screed or vibration damping application in construction industry.

The quest for lightweight, high-quality sound insulating materials has been of central interest to the engineering acoustics community. The challenge originates from the poor acoustical performance or high cost of the market materials in the very low frequency range, which is vital for structure-borne noise. As a result, former materials on their own are not able to address engineering demands and must be employed in multilayered structures or high thicknesses, which are often not an efficient solution due to thickness, weight, and/or cost.

Our system of aerogel, expanded cork and/or recycled rubber, and binder with possibility of being foamed, with a variety of pore sizes, make a good vibration damping composite with a resonance frequency of lower than 30 Hz under the load 0.002 N/mm².

### BRIEF DESCRIPTION OF THE DRAWINGS

Further understanding of various aspects of the invention can be obtained by reference to the following detailed description in conjunction with the associated drawings, which are described briefly below.
- Figure 1a: shows a photography of an example of a profiled (silica)-aerogel-(expanded)-cork composite, which is superhydrophobic with added fluid droplets, while
- Figure 1b: shows a photography of a covered mat of profiled (silica)-aerogel-(expanded)-cork composite according to Figure 1a.
- Figure 2: shows a schematics of the hot-press based manufacturing method of mats of the composite with and without cover surfaces.

Aerogel comprising composites as acoustically insulating composite material for under-screed or vibration damping application can be promising products for replacing PU foams. The nano- and open cellular structures of aerogels may be extremely beneficial to their high damping performance. Especially the silica aerogels and resulting composites show good elastic properties. But since aerogels as first filling particles or first filler are a relatively expensive material in comparison to other fillers, the use of only aerogel materials leads to high prices and has disadvantages.

To compete in the market, ease the production/installation process and handling, and avoid excessive aerogel dust release, cork, especially expanded cork or rubber is introduced as second filler particles. With the incorporation of the expanded cork or rubber materials as an economical, natural or recycled material, the cost of expensive aerogels can be partially avoided, but the high performance can be maintained, according to our data. Also, lower aerogel contents, when mixed with second fillers, decrease the amount of required binder, leading to the same or higher density, different spring properties in mass-spring acoustic damping.

The aerogel can be inorganic, preferably silica aerogel or organic or an organic-inorganic hybrid aerogel.

Suitable examples of inorganic aerogels are those manufactured from metal oxides. Examples of suitable metaloxides are silica, titania, zirconia, alumina, hafnia, yttria, ceria, Stannous oxide, chromium oxide thoria, or the like, or a combination comprising at least one of the foregoing aerogels. The most preferred aerogel for use in the aerogel-polymer composite is one that comprises silica.

Suitable examples of organic aerogels are resorcinol-formaldehyde aerogels, phenol-furfural aerogels, phenol-formaldehyde aerogels, polyurethane aerogels, polyimide aerogels, polyacrylate aerogels, chitosan aerogels, cellulose aerogels, polymethyl methacrylate aerogels, aerogels derived from members of the acrylate family of oligomers, trialkoxysilyl terminated polydimethylsiloxane aerogels, polyoxyalkylene aerogels, polybutadiane aerogels, polyetheraerogels, or the like, or a combination comprising at least one of the foregoing organic aerogels.

Suitable examples of organic-inorganic hybrid aerogels include silica-PMMA aerogels, silica-chitosan aerogels, silica-polyethylene glycol aerogels, silica-polydimethylsiloxane aerogels, or the like, or a combination comprising at least one of the foregoing organic-inorganic hybrid aerogels.

There is no restriction on the aerogel particle sizes since the material is brittle and the particle sizes may change during the dry mixing. Use of aerogel granulates, instead of aerogel powder, is preferred if limiting the release of dust in the air during mixing is important. While there is no restriction on aerogel particles sizes, it is generally desirable to use aerogel particles having average particle sizes of about 0.1-5 millimeters, preferably about 1-3 millimeters, before dry blending.

All used second filler granules or granulates have particle diameter between 0.5 and 10 mm, preferred between 0.5 and 6, and most preferred between 0.5 and 4 mm.

Most preferred cork granules are expanded cork granules, if used as second filler.

Most preferred rubber is recycled rubber, if used as second filler or third filler. The rubber used to be mixed with aerogels and/or cork, can be either natural or synthetic. The rubber used should form granulates or fibers, to be mixed with aerogels and/or cork. Suitable examples of rubber granules are recycled rubber, natural rubber, synthetic rubber, e.g. fluorosilicone rubber, styrene-butadiene rubber, neoprene rubber, butyl rubber, nitrile rubber, butadiene rubber, ethylene-propylene rubber, polyisoprene Vinyl rubber, EPDM rubber, fluorine rubber or silicone rubber.

Best first filler aerogel used was silica aerogel particles forming an aerogel material with a tap density <0.20 g/cm³, preferred <0.15 g/cm³, most preferred <0.10 g/cm³, and a surface area of 500-1200 m²/g, preferred 600-1000 m²/g, most preferred 700-1000 m²/g.

The preferred binder is a water- or latex-based binder, e.g. natural latex rubber led to the replacing of former PU based adhesives for rubber based noise and vibration damping products, resulting in lower costs while reducing environmental impact, is a further advantage. But other binders as water-based adhesive selected from the group: rubber, vinyl acetate, acrylate, polyurethane can be used.

Such binder may comprise:
vulcanizing or curing agents e.g. sulfur,
   and/or
metal oxides e.g. zinc oxide,
   and/or
organic acids e.g. stearic acid,
   and/or
curing retarders or inhibitor e.g. n-(cyclohexylthio)phthalimide, and/or
curing accelerator e.g. mercaptoimidazoline,
   and/or
physical or chemical blowing agent e.g. azodicarbonamid.

The acoustically insulating composite material may additionally comprise additives in form of inorganic or organic flame retardants, water-repelling agents, antibacterial agents as known in the art.

If the acoustically insulating composite material is protected with additional protective sheets X or facers, such will comprise plastic foils, polymeric foils, metal foils or textiles, including all wovens, nonwovens with synthetic, organic, inorganic or natural fibers or mixtures thereof. Protective sheets could be placed either on one or on both sides faces, covering the acoustically insulating composite material, which were fixed with adhesives, to prevent the aerogel from escaping.

When adding the mixture of first and/or second fillers mixed with binder to the mold, a foam can be laid down on the bottom, or in between or on top of the filler materials to improve acoustic and mechanical properties. Such foams include polymeric foams, including polystyrene (EPS & XPS), polyolefin (PE & PP), polyvinyl chloride (PVC), melamine, phenolic, polyurethane, reticulated polyurethane, rubber, specialty foams, and their cross-linked forms, with closed or open or mixed cells.

Resulting acoustically insulating composites have the following properties:
dynamic stiffness between 4 and 12, preferred between 4 and 10, and most preferred between 4 and 6 MN/m³, or a resonance frequency between 22 and 39, preferred between 22 and 35, and most preferred between 22 and 27 Hz, based on BS EN 29052-1:1992 under the load 200 kg/m² or 0.002 N/mm². Lower resonance frequency down to <20 Hz can happen under the higher loads, e.g. >0.01 N/mm² based on viscoelastic and vibroacoustic properties (standard DIN 53513 and/or ISO 10846) of acoustically insulating composites.

Beside high-performance aerogel-cork based composites with different amounts of aerogel and cork, also composites of aerogel and amounts of rubber as well as a combination of aerogel-cork-rubber composites were prepared, showing good vibration damping results.

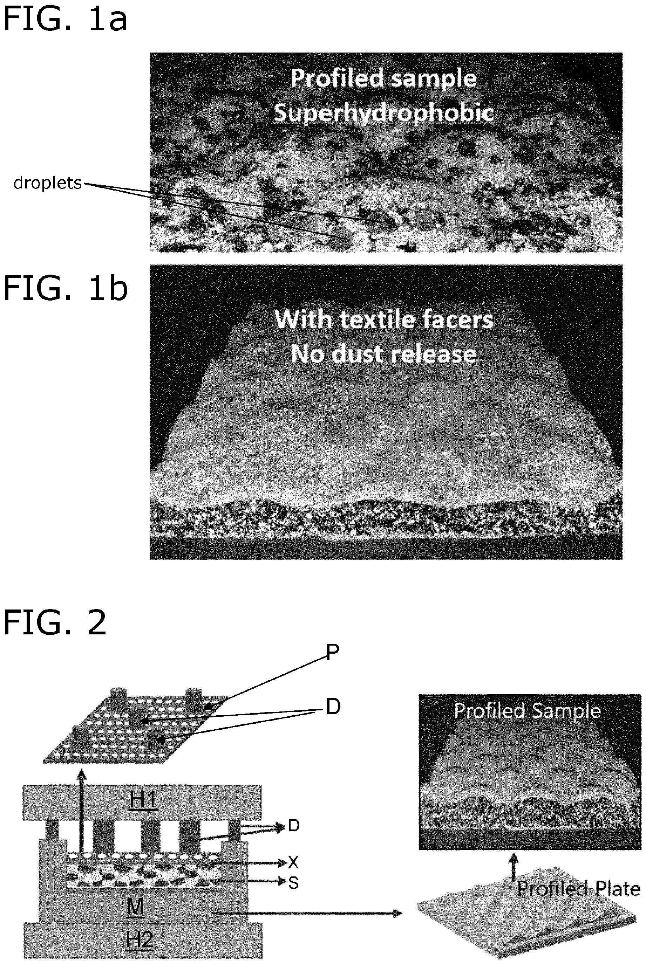

Figure 1a shows a photography of an example of a profiled (silica)-aerogel-(expanded)-cork composite, which is superhydrophobic, which is indicated with added fluid droplets.

Figure 1b shows the profiled composite according to Figure 1a with cover surfaces or protective sheets above and below.

Here are some examples which showed good results, forming mats of acoustically insulating composites with thicknesses between 10mm and 50mm and with smooth or profiled surfaces.

### Example 1, explained with Figure 2

40 g silica aerogel granulates (sourced by Cabot, P200, sieved with particle size between 0.1-1.2 mm, pore diameter of 20 nm, porosity of >90%, particle density of 0.12 g/cm³, pack density of 0.08 g/cm³, and specific surface area of 600-800 m²/g)
are dry mixed with
25 g expanded cork granulates (sourced by HAGA AG Naturbaustoffe, with particle size of 1-5 mm and pack density of 0.08 g/cm³).

Binder = 70 g natural rubber latex suspension in water (sourced by RESINEX, 60% natural rubber content in water) is mixed with 1.2 g sulfur, 1.2 g Zinc oxide, 0.4 g n-(cyclohexylthio)phthalimide, and gradually is added to premix of aerogel and cork.

The materials are mixed and shaken to be homogenously mixed. The binder covers some particles completely and some partially. The mixed materials are loaded to a mold M, already treated with releasing agents not shown on the bottom and/or side walls of the mold M.

The mold M can be made of metal, Teflon, silicone or wood, in every shape needed for product production. The releasing agents or demolding agents can be made of low surface energy materials, e.g. silicon, Teflon, paraffin, natural or synthetic oils. For example 1, metal mold M with metal holed plate P and Teflon releasing agent is used.

As protective sheet X: a layer of a nonwoven polypropylene textile (17 g/m²) is put on the mold's M bottom and a layer on top on the aerogel and cork mixture S.

A metal holed plate P is placed on top of the sample S and some metal spacers D are on it to impose intended pressure on the sample S. The mold M is heated between two hot plates H1, H2, by which the materials are dried and form the silica aerogel-expanded cork composite. During heating as hot-press method step, the water of the binder evaporates, and bonding between the binder and other materials is generated.

With the use of the crosslinking agents in the binder, crosslinking between binder molecules happens for better insulation/mechanical properties. The resonance frequency of the sample S with a thickness of 22 mm resulted from example 1 is ~43 Hz, the dynamic stiffness is ~14 MN/m³ under the load 0.002 N/mm², and the thermal conductivity is 0.028 W/mK.

### Example 2, profiled

32 g silica aerogel granulates (sourced by Cabot, P200, sieved with particle size between 0.1-1.2 mm, pore diameter of 20 nm, porosity of >90%, particle density of 0.12 g/cm³, pack density of 0.08 g/cm³, and specific surface area of 600-800 m²/g)
are dry mixed with
20 g expanded cork granulates (sourced by HAGA AG Naturbaustoffe, with particle size of 1-5 mm and pack density of 0.08 g/cm³).

Binder = 60 g natural rubber latex (sourced by RESINEX, 60% natural rubber content) is mixed with 1 g sulfur, 1 g Zinc oxide, 0.4 g n-(cyclohexylthio)phthalimide, 1 g stearic acid, and 4 g azodicarbonamid and gradually is added to premix of aerogel and cork.

The profiled silica aerogel-expanded cork composite is formed in the same manner as in Example 1, but the mold's M bottom plate is profiled. The resonance frequency of the profiled silica aerogel-expanded cork composite S with a thickness of 22 mm resulted from example 2 is ~28 Hz and the dynamic stiffness is ~6 MN/m³ under the load 0.002 N/mm², and resonance frequency of ~20 Hz and the dynamic stiffness of ~20 MN/m³, under the load 0.012 N/mm².

### Example 3

17 g silica aerogel granulates (sourced by Cabot, P200, sieved with particle size between 0.1-1.2 mm, pore diameter of 20 nm, porosity of >90%, particle density of 0.12 g/cm³, pack density of 0.08 g/cm³, and specific surface area of 600-800 m²/g)
are dry mixed with
257 g recycled rubber granulates (sourced by GENAN, with particle size of 0.8-3 mm and pack density of 0.42 g/cm³).

Binder= 56 g natural rubber latex (sourced by RESINEX, 60% natural rubber content) is mixed with 1 g sulfur, 1 g Zinc oxide, 0.4 g n-(cyclohexylthio)phthalimide gradually is added to premix of aerogel and recycled rubber.

Silica aerogel-recycled rubber composite is formed in the same manner as in Example 1, with the difference that expanded cork is replaced with the recycled rubber granulates. The dynamic stiffness of the silica aerogel-recycled rubber composite S with a thickness of 22 mm resulted from example 3 is ~12 MN/m³, the resonance frequency is ~39 Hz under the load 0.002 N/mm² and the thermal conductivity is 0.061 W/mK.

### Example 4

Profiled silica aerogel-recycled rubber composite was prepared in the same manner as in Example 3, with the exception that mold's M bottom plate is replaced with the profiled bottom plate.

30 g aerogel granulates (sourced by Cabot, P200, sieved with particle size between 0.1-1.2 mm, pore diameter of 20 nm, porosity of >90%, particle density of 0.12 g/cm³, pack density of 0.08 g/cm³, and specific surface area of 600-800 m²/g)
are dry mixed with
135 g recycled rubber granulates (sourced by GENAN, with a particle size of 0.8-5 mm and pack density of 0.45 g/cm³).

Binder= 60 g natural rubber latex (sourced by RESIN EX, 60% natural rubber content) is mixed with 1 g sulfur, 1.5 g Zinc oxide, 1.5 g n-(cyclohexylthio)phthalimide, 0.8 g stearic acid, 2 g azodicarbonamid gradually is added to premix of aerogel and recycled rubber.

Profiled silica aerogel-recycled rubber composite with the thickness of 22 mm resulted from example 4 showed the resonance frequency of ~27 Hz, and the dynamic stiffness of ~6 MN/m³, under the load 0.002 N/mm2, and resonance frequency of ~19 Hz and the dynamic stiffness of ~17 MN/m³, under the load 0.012 N/mm².

### Example 5

Profiled silica aerogel-recycled rubber composite was prepared in the same manner as in Example 4, with the exception that a layer of reticulated PU foam PPI 20 and 5 mm thickness was added between the materials mixture.

30 g aerogel granulates (sourced by Cabot, P200, sieved with particle size between 0.1-1.2 mm, pore diameter of 20 nm, porosity of >90%, particle density of 0.12 g/cm³, pack density of 0.08 g/cm³, and specific surface area of 600-800 m²/g)
are dry mixed with
135 g recycled rubber granulates (sourced by GENAN, with a particle size of 0.8-5 mm and pack density of 0.45 g/cm³).

Binder= 75 g natural rubber latex (sourced by RESIN EX, 60% natural rubber content) is mixed with 1 g sulfur, 1.5 g Zinc oxide, 1.5 g n-(cyclohexylthio)phthalimide, 0.8 g stearic acid, 2 g azodicarbonamid gradually is added to premix of aerogel and recycled rubber.

Profiled silica aerogel-recycled rubber-PU foam composite S with the thickness of 24 mm resulted from example 5 showed the resonance frequency of ~23 Hz, and the dynamic stiffness of ~4 MN/m³ under the load 0.002 N/mm2, and resonance frequency of ~17.8 Hz and the dynamic stiffness of ~15 MN/m³, under the load 0.012 N/mm².

Additional experiments showed good results of acoustically insulating composites, comprising amounts of silica aerogel, cork and rubber particles. Granules, granulates or powder of expanded cork, recycled rubber and silica aerogel were bound by the same latex-based binder as natural rubber latex and compressed into (profiled) mats/boards in the hot press procedure. The properties and cost can be tailored to the application by varying the proportion of the different granules, the amount of binder, and the production conditions (P, T, t).

Most preferred is the quantity weight ratio of aerogel to binder mass in acoustically insulating composite materials between 1:6 to 1:0.4, preferably between 1:3 to 1:1.

Most preferred is the quantity weight ratio of first filler, aerogel to second filler, cork and/or rubber, in acoustically insulating composite materials between 1:0 to 1:20, preferably between 1:0.5 to 1:20, more preferably between 1:15 to 1:0.5.

### Method of manufacturing aerogel-cork-rubber composites

Herein is a method of manufacturing aerogel-cork-rubber composites that comprise aerogel and/or cork and/or rubber granulates or powders, bound with a binder e.g. aqueous natural rubber latex for structure-borne sound insulating materials, included under-screed and vibration damping in construction industry.

A variety of material combinations has been evaluated, depending on the proportion of fillers, but all with the same method of preparation and binder. Materials include silica aerogel (SA), expanded cork (EC), recycled rubber (RR), a water- or latex-based binder, e.g. natural rubber (NR) latex or synthetic rubber binder, including SBR binder, and additives.

The preparation comprises the following steps:
the target granulates or powders are dry mixed,
the binder gradually is added to premix of aerogel, cork and rubber.

The materials are mixed and/or shaked to be homogeneously mixed. The mixed materials are loaded into the mold M, leveled and heated in an appropriate pressure, 0-10000 Pa, preferred 0-1000 Pa, most preferred 100-500 Pa and
temperatures between ambient and 200 °C, preferred 100-180 °C, most preferred 140-170 °C,
in such hot-press device, to be dried/cured and form the composite, preferably in a monolithic piece.

With hot pressing we mean any technology that applies a pressure and temperature on the sample at the same time in general.

During heating, the water of the binder evaporates, and bonding between the binder and other materials is generated. Holes in the holed plate P help to let the liquids evaporate out.

The binder partially or completely covers the particles, based on the ratio of the binder to the granules and binder's viscosity. With use of a crosslinking agent in the binder, crosslinking between binder molecules happens for better mechanical properties. Figure 2 shows the molding process and formed the sample S. Use of low amount of an aqueous natural rubber and mix with aerogels doesn't allow it to penetrate to the aerogel pores, and preserve aerogel properties like low density, low thermal conductivity and acoustic properties. A wide variety of materials combinations have been screened in terms of dynamic stiffness, resonance frequency and materials' cost, which lead to the identification of the targeted markets/products.

The binder is a binder, which after drying or curing is flexible. Binder can be aqueous or water-based or latex-based or emulsified. Binder can be a rubber latex, e.g. natural rubber and/or synthetic rubber. We use natural rubber latex. The solid content is most preferred 60%. The viscosity of the binder can be adjusted by diluting with water or thickening with a thickening agent. Amount of binder depends on the type of materials, ratio of the materials to each other, required physical properties, and the molding pressure. When using higher amount of the aerogel, higher amount of binder is needed to cover the aerogel particles from being released. When using higher molding pressure, showing higher resistance to the pressure later, less amount of binder is needed, since materials are compacted and close enough together to be adhered. The properties of the composites may therefore vary depending on the type and amount of binder used.

The aerogel-cork-rubber composites formed as a result of this invention can be macroporous or meso-macro porous. Macropososity comes from pores formed between the granules or included in the foamed binder or expanded cork itself. The expanded cork itself is also macroporous. Mesoporosity comes from aerogels. For aerogel-cork composites, mesoporosity range from about 12-55%, preferably from about 30-40, and macroporosity range from about 20-60%, preferably from about 40-60, more preferably from 45-55%.

For aerogel-rubber composites, mesoporosity range from about 15-45%, preferably from about 15-40, and macroporosity range from about 20-60%, preferably from about 40-60. For aerogel composites, mesoporosity range from about 50-80%, preferably from about 65-80, and macroporosity range from about 20-60%, preferably from about 40-60, more preferably from 45-55%.

The aerogel-cork-rubber composites formed as a result of this invention have a resonance frequency of 10-75 Hz, dynamic stiffness of 4-45 MN/m³, based on the load (> 0.002 N/mm²) on top of the composite. The thermal conductivity ranges from 0.025 W/mK for high aerogel content samples to 0.09 W/mK for only rubber included samples, preferably about 0.025-0.035 W/mK for aerogel-cork composites and 0.03-0.06 W/mK for the aerogel-rubber composites.

The aerogel-cork-rubber composites may be used alone or under the screed, in the floating or raised floors, under parquet, ceramic, concrete, mineral shell, in the panels for structure-borne sound insulation or vibration damping.

To help with dusting or water repellency, the protective sheets on the lower and upper surfaces of the products can be used. Optional protective sheets X can be e.g. plastic foils, polymeric foils or textiles. The textile can include all woven, nonwoven, organic or inorganic or natural fibers or mixtures thereof, and metal foils. Aerogel composites can be matched to the other products in the manufacturing factory ready for use or can be matched with the other building materials when they are applied.

In a further embodiment of the acoustically insulating composite material, mixed in one of the above mentioned possibilities, a foam material is applied at the bottom and/or middle and/or top during the mixing and hot press production or after in a separate procedure. Such foam will comprise polymeric foams, including polystyrene (EPS & XPS), polyolefin (PE & PP), polyvinyl chloride (PVC), melamine, phenolic, polyurethane, reticulated polyurethane, rubber, specialty foams, and their cross-linked forms, with closed or open or mixed cells.

Production method of aerogel comprising composites according to one of the above mentioned mixtures, wherein heating and/or pressing is done at any devices and or technology applying an appropriate pressure between 0 and 10000 Pa, preferred 0 and 1000 Pa, most preferred 100 and 500 Pa and temperature between ambient and 200 °C, preferred 100-180 °C, most preferred 140-170 °C.

### LIST OF REFERENCE NUMERALS

- M: mold
- H: hot plate
- P: holed plate
- S: sample
- D: spacer
- X: protective sheet

## Claims

1. Acoustically insulating composite material comprising at least an amount of cork and/or rubber, forming mats or boards for application in construction industry,
**characterized in that**
the composite material comprises
beside an amount of cork granules, most preferred expanded cork
and/or
the amount of rubber granules or fibers of natural or synthetic rubber, most preferred recycled rubber,
an amount of aerogel particles, most preferred granules,
as well as an amount of a water- or latex-based binder, most preferred a natural rubber latex or water-based styrene-butadiene rubber emulsion, wherein all materials were hot-pressed forming the mats or boards.

2. Acoustically insulating composite material according to claim 1,
wherein particle diameters of aerogel granules are between 0.1 and 10 mm, preferred between 0.1 and 5, and most preferred between 0.1 and 2 mm,
and particle diameters of rubber granules and/or cork granules are between 0.1 and 10 mm, preferred between 0.8 and 5, and most preferred between 1 and 3 mm.

3. Acoustically insulating composite material according to claim 2, wherein the resulting composite aeorgel comprising material shows a tap density <0.20 g/cm³, preferred <0.15 g/cm³, most preferred <0.10 g/cm³, and a specific surface area of 500-1200 m²/g, preferred 600-1000 m²/g, most preferred 800-1000 m²/g.

4. Acoustically insulating composite material according to one of the preceding claims, wherein the aerogel is inorganic, preferably silica aerogel or organic or an organic-inorganic hybrid aerogel, like silica-PMMA aerogels, silica-chitosan aerogels, silica-polyethylene glycol aerogels, silica-polydimethylsiloxane aerogels, or the like, or a combination comprising at least one of the foregoing organic-inorganic hybrid aerogels.

5. Acoustically insulating composite material according to one of the preceding claims, wherein the rubber is fluorosilicone rubber, styrene-butadiene rubber, neoprene rubber, butyl rubber, nitrile rubber, butadiene rubber, ethylene-propylene rubber, polyisoprene Vinyl rubber, EPDM rubber, fluorine rubber or silicone rubber.

6. Acoustically insulating composite material according to one of the preceding claims, wherein the binder comprises water-based or latex-based adhesive or binder selected from the group: rubber, isoprene, vinyl acetate, acrylate, polyurethane.

7. Acoustically insulating composite material according to one of the preceding claims, wherein the binder respectively the acoustically insulating composite material is mixed with additives like vulcanizing or curing agents and/or metal oxides and/or organic acids and/or curing retarders and/or curing accelerator and/or physical or chemical blowing agents, before hot-pressing.

8. Acoustically insulating composite material according to one of the preceding claims, wherein on the top side and/or the bottom side of the acoustically insulating composite material is covered with protective sheets (X) comprising plastic foils, polymeric foils, metal foils or textiles or mixtures thereof.

9. Acoustically insulating composite material according to claim 8, wherein the protective sheet (X) is a textile including all woven, nonwovens with synthetic, organic, inorganic or natural fibers or mixtures thereof.

10. Acoustically insulating composite material according to one of the preceding claims, wherein the quantity weight ratio of aerogel to binder mass is between 1:6 to 1:0.4, preferably between 1:3 to 1:1.

11. Acoustically insulating composite material according to one of the preceding claims, wherein the quantity weight ratio of first filler, aerogel to second filler, cork and/or rubber, is between 1:0 to 1:20, preferably between 1:0.5 to 1:20, more preferably between 1:15 to 1:0.5.

12. Production method of aerogel comprising composites according to one of the claims 1 to 11, **characterized by** the steps:
a) mixing a binder with dry mixing amounts of granules, powders or fibers of aerogel and/or rubber and/or cork, forming a mixture of binder aerogel and/or rubber and/or cork,
b) placing such mixture in a mold (M),
c) heating and pressing step for shaping and compression before subsequent
d) drying and/or curing of hot pressed mixture respectively the binder and
e) release from mold (M).

13. Production method of aerogel comprising composites according to claim 12, wherein the mixture was surrounded on the top face and the bottom face of the mixture in the mold (M) with protective sheets (X).

14. Production method of aerogel comprising composites according to one of the claims 12 or 13, wherein the bottom face and/or the top face of the mold (M) shows profiles.

15. Production method of aerogel comprising composites according to one of the claims 12 to 14, wherein the quantity weight ratio of first filler, aerogel to binder mass (100%) is between 1:6 to 1:0.4.

16. Production method of aerogel comprising composites according to one of the claims 12 to 15, wherein the quantity weight ratio of first filler, aerogel to second filler, cork or rubber, is between 1:0 to 1:20.

17. Use of an acoustically insulating composite material according to one of the claims 1 to 11 for under-screed or vibration damping application in construction industry, wherein such composite material forms mats with preferred thicknesses between 1 mm and 50 mm.
